# EUROPÄISCHE PATENTANMELDUNG

(11) **EP 0 599 133 A2**
(43) Veröffentlichungstag der Anmeldung: **01.06.1994**
(21) Anmeldenummer: 93118199.4
(22) Anmeldetag: 09.11.1993
(51) Int. Cl.: H04M 1/72

(54) **Digitales Telefoninterface zwischen einem Mobiltelefon und einem offentlichen Fernsprechendgerät**

(30) Priorität: 26.11.1992 DE 9216108 U
(71) Anmelder: SIEMENS AKTIENGESELLSCHAFT, D-80333 München (DE)
(72) Erfinder: Hausa, Joachim, D-85716 Unterschleissheim (DE); Lettmann, Hubert, D-82008 Unterhaching (DE)

(57) **Zusammenfassung**

Das DTI dient als Übergang von einem ein Funkteil, einen Bedienhörer und eine Antenne enthaltenden Mobiltelefon auf eine Zweidrahtschnittstelle von öffentlichen Fernsprechendgeräten.
Nach der erfindungsgemäßen Ausbildung enthält eine DTI-Baugruppe einen 2/4-Umsetzer zur Umsetzung des 4-drähtigen NF-Kanals des Mobiltelefons auf eine 2-Draht-NF für das Fernsprechendgerät, eine Einrichtung zum Einspeisen bzw. Unterbrechen des Schleifenstroms nach Abheben und Auflegen des Telefonhörers, eine Schnittstelle zum Mobiltelefon für den Informationsaustausch in beiden Richtungen, eine in Speichern abgelegte Datenbasis für einstellbare, kundenspezifische Daten sowie Überwachungsschaltungen.

## Beschreibung

Die Neuerung bezieht sich auf ein digitales Telefon-Interface (DTI) als Übergang von einem ein Funkteil, einen Bedienhörer und eine Antenne enthaltenden Mobiltelefon auf eine zweidrahtschnittstelle von öffentlichen Fernsprechendgeräten.

In Gebieten, in denen drahtgebundene Kommunikationseinrichtungen in ihrer Stückzahl nicht wirtschaftlich erscheinen oder möglich sind, beispielsweise in abgelegenen Landstrichen, Wüstengebieten, Landfahrzeugen oder Schiffen, können die notwendigen öffentlichen Koommunikationsmittel durch ein Mobilfunksystem bereitgestellt werden. Eine solche Einrichtung mit einem üblichen Münzfernsprecher als Endgerät und einem mit diesem über ein prozessorgesteuertes Interface verbundenen Mobiltelefon ist durch das deutsche Gebrauchsmuster 91 12 070 bekannt. Die Handhabung des Endgerätes erfolgt in der gleichen Weise, als wäre es an die Vermittlungsstelle des Festnetzes angeschlossen. Über das Interface erfolgt die Verbindung der drahtgebundenen Telefoneinrichtungen und der drahtlosen Telefoneinrichtungen.

Der Neuerung liegt die Aufgabe Zugrunde, ein in seinem Aufbau einfaches digitales Telefon-Interface zu schaffen, das die für die Kompatibilität öffentlicher Telefongeräte und digitaler Mobilfunksysteme notwendigen Anpassungen enthält.

Diese Aufgabe wird gemäß der Neuerung gelöst durch eine einen 2/4-Umsetzer zur Umsetzung des 4-drähtigen NF-Kanals des Mobiltelefons auf eine 2-Draht-NF für das Fernsprechendgerät, eine Einrichtung zum Einspeisen bzw. Unterbrechen des Schleifenstroms nach Abheben und Auflegen des Telefonhörers, eine Schnittstelle (EMMI - Electrical Man Machine Interface) zum Mobiltelefon für den Informationsaustausch in beiden Richtungen, eine in Speichern abgelegte Datenbasis für einstellbare, kundenspezifische Daten wie Tarifzonen lokal, national, international sowie Über wachungsschaltungen enthaltende DTI-Baugruppe.

Vorteilhafte Ausgestaltungen und Weiterbildungen des Gegenstandes der Neuerung sind in den Unteransprüchen angegeben.

Nachstehend wird die Erfindung anhand von in der Zeichnung dargestellten Ausführungsbeispielen näher erläutert.

Es zeigen:
- Figur 1: ein DTI im Blockschaltbild,
- Figur 2: die Elemente einer solarbetriebenen Telefonzelle im Blockschaltbild und
- Figur 3: eine Prinzipdarstellung einer solarbetriebenen Telefonzelle mit DTI.

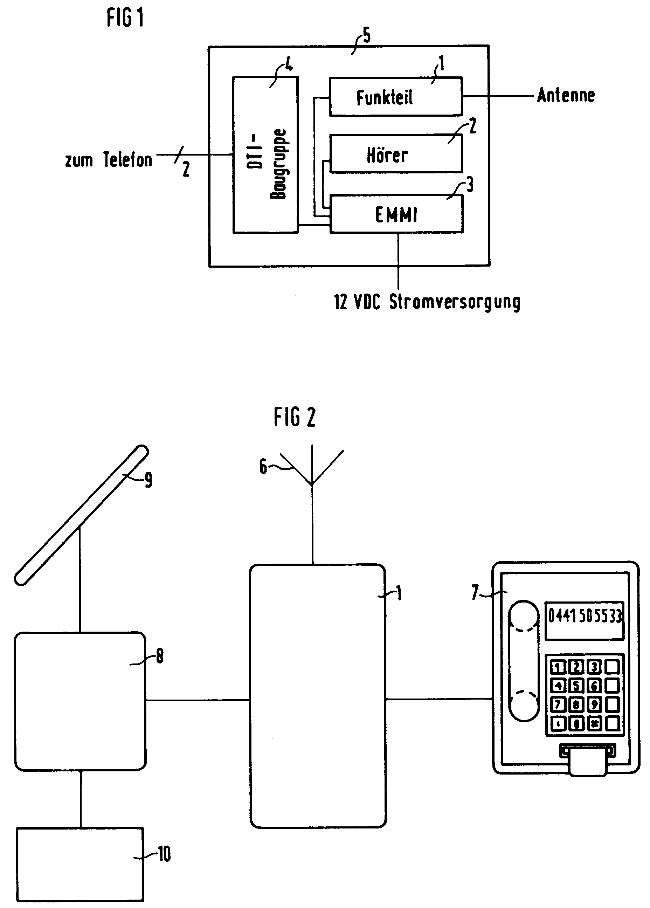

Das System digitales Telefon-Interface besteht aus folgenden, in Figur 1 dargestellten Komponenten: einem Funkteil 1 eines Mobiltelefons, einem Hörer 2 des Mobiltelefons, einer mit EMMI (Electrical Man Machine Interface) bezeichneten Baugruppe 3 sowie der DTI-Baugruppe 4, die alle innerhalb eines Gehäuses 5 angeordnet sind. Die einzelnen Baugruppen innerhalb des Gehäuses sind miteinander verbunden. Vom Funkteil 1 führt eine Verbindung zu einer Antenne, von der DTI-Baugruppe 4 führen zwei Verbindungsleitungen zum Telefon, bei dem es sich um einen Karten- oder Münzfernsprecher oder ein herkömmliches Nebenstellentelefon handeln kann. Ferner ist ein Solarsystem für eine netzunabhängige 12 V-Gleichstromversorgung für die einzelnen Baugruppen vorgesehen.

Das digitale Telefon-Interface ermöglicht die Interoperabilität zwischen öffentlichen Fernsprechendgeräten und dem Mobilfunksystem D900 gemäß GSM und läßt sich bei entsprechender Anpassung auch für weitere digitale Mobilfunknetze verwenden. Die Komponenten Funkteil und Hörer des Mobiltelefons sind dabei im digitalen Telefon-Interface integriert. Die Baugruppe EMMI dient als Schnittstelle zwischen dem Funkteil 1 des Mobiltelefons und der DTI-Baugruppe 4. Sie ist mit einem Bussystem mit dem Funkteil 1 und mit einer seriellen Schnittstelle mit der DTI-Baugruppe 4 verbunden. Bei bekannter Busschnittstelle von der beweglichen Funkseite kann die Schnittstelle DTI-Baugruppe über eine Busschnittstelle direkt mit dem Funkteil des Mobiltelefons verbunden werden. Die Baugruppe EMMI und der Hörer entfallen dann.

In der DTI-Baugruppe 4 ist die notwendige Anpassung realisiert. Sie beinhaltet die nachstehenden Funktionen:
1. Einen 2/4-Umsetzer, in dem der 4-drähtigen NF-Kanal des Mobilfunkgeräts auf eine 2-Draht-NF für das Telefon umgesetzt wird (a, b-Ader).
2. Den Schleifenstrom, d.h. das Speisen bzw. Unterbrechen nach Abheben und Auflegen des Telefonhörers.
3. Die Wahlaufnahme und
4. die kundenspezifische Vergebührung, wobei lokale, nationale, internationale und gebührenfreie Rufe unterschieden sowie Umschaltzeiten für Tag- und Nachttarife berücksichtigt werden. Abhängig von o.a. Gesprächsarten werden als Abbuchkriterium einem Münz- oder Kartentelefon eine entsprechende Anzahl von 12 kHz-Pulsen geliefert.
5. Schnittstelle zum Mobiltelefon, in dem Informationen gemäß einem Mobiltelefon-Protokoll in beiden Richtungen mit dem Mobiltelefon ausgetauscht werden. Ebenso werden die vom Mobiltelefon gesendeten Testanzeigen in vorgesehenen unterschiedlichen Sprachen ausgewertet. Dies beinhaltet auch die notwendige automatische PIN- und Gerätecodeeingabe nach dem Systemhochlauf.
6. DTI-Datenbasis, die in EPROM's abgelegt ist. Dabei können Änderungen über das angeschlossene Telefon mit Service-Nummern (durch ein Paßwort gesichert) durchgeführt werden. Hierbei sind kundenspezifische Daten einstellbar, z.B. Definition des Ortsbereichs, was die Tarifierung der Ortsgespräche ermöglicht und eine Basis für die Vergebührung der nationalen und internationalen Gespräche bildet, Definition Tag/Nacht-Zeit, Änderung des Paßwortes oder Rückstellen des Paßwortes, wenn das einzustellende Paßwort vergessen wurde.
7. Software und
8. Überwachungsschaltungen, die das Mobiltelefon sowie die Baugruppen EMMI und DTI überpüfen und ein automatisches Wiedereinschalten nach Spannungseinbruch mit automatischer PIN- und Gerätecodeeingabe veranlassen.

Durch dieses Interface besteht die Möglichkeit, öffentliche Telefonzellen in Gebieten aufzubauen, in denen keine Fernmelde- und Stromversorgunginfrastruktur vorhanden ist. Die Stromversorgung kann durch Solarmodule und Akkus erfolgen. Eine solche Telefonzelle kann innerhalb kürzester Zeit in einem von GSM-mobilfunkversorgten Gebiet aufgestellt werden. Weiterhin kann durch Aufbau von öffentlichen Telefonen auf Schiffen oder in Eisenbahnzügen der Komfort erhöht werden. Die Handhabung der Endgeräte erfolgt in der gleichen Weise, als wären sie an Vermittlungsstellen des Festnetzes angeschlossen. Es können sowohl gehende als kommende Verbindungen hergestellt werden. Beim Einsatz von Karten- oder Münzfernsprechern werden abhängig vom Zielort der Verbindung Vergebührungsinformationen vom DTI zum Endgerät geliefert.

Figur 2 zeigt im Blockschaltbild den Aufbau eines solchen Systems, bestehend aus einem öffentlichen Fernsprechgerät, einem digitalen Telefon-Interface sowie einem Mobiltelefon, bei dem eine solarbetriebene Stromversorgung vorgesehen ist. Die in Bildmitte angeordnete Baugruppe 5 enthält, entsprechend dem Aufbau von Figur 1, den Funkteil und den Bedienhörer (Handset) eines Mobiltelefons sowie die Baugruppen EMMI und DTI. Die Baugruppe 1 ist mit einer Antenne 6 versehen und mit einem Kartentelefon 7 sowie einer Solarladeregelung 8 verbunden, an die ein Solarpaneel 9 und ein Akku 10 angeschlossen sind.

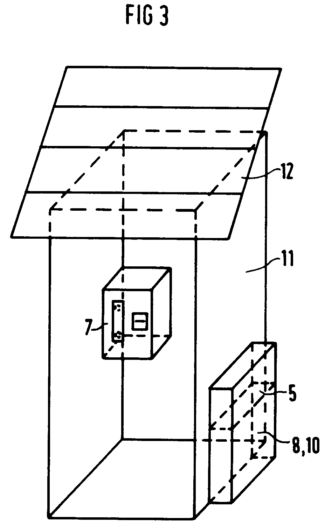

Figur 3 zeigt in einer Prinzipdarstellung eine solarbetriebene Telefonzelle mit digitalem Telefon-Interface. Dabei sind auf dem Dach einer mit 11 bezeichneten Telefonzelle Solarmodule 12 angebracht. Im Innern der Telefonzelle 11 befindet sich ein Kartentelefon 7. Das digitale Telefon-Interface DTI ist gemeinsam mit Reglern 8 und Batterien 10 in einem wetterfesten Gehäuse seitlich an der Telefonzelle 11 angeordnet.

## Patentansprüche

1. Digitales Telefon-Interface (DTI) als Übergang von einem ein Funkteil, einen Bedienhörer und eine Antenne enthaltenden Mobiltelefon auf eine Zweidrahtschnittstelle von öffentlichen Fernsprechendgeräten, **gekennzeichnet** durch eine einen 2/4-Umsetzer zur Umsetzung des 4-drähtigen NF-Kanals des Mobiltelefons auf eine 2-Draht-NF für das Fernsprechendgerät, eine Einrichtung zum Einspeisen bzw. Unterbrechen des Schleifenstroms nach Abheben und Auflegen des Telefonhörers, eine Schnittstelle (EMMI - Electrical Man Machine Interface) zum Mobiltelefon für den Informationsaustausch in beiden Richtungen, eine in Speichern abgelegte Datenbasis für einstellbare, kundenspezifische Daten sowie Überwachungsschaltungen enthaltende DTI-Baugruppe.

2. Digitales Telefon-Interface nach Anspruch 1, **gekennzeichnet** durch eine Einrichtung zur Vergebührung von Rufunterscheidung und Berücksichtigung von Umschaltzeiten für verschiedene Tarife.

3. Digitales Telefon-Interface nach Anspruch 1 oder 2, dadurch **gekennzeichnet,** daß die Überwachungsschaltungen der Überprüfung einzelner Baugruppen dienen und ein automatisches Wiedereinschalten nach Spannungseinbruch veranlassen.

4. Digitales Telefon-Interface nach einem der Ansprüche 1 bis 3, dadurch **gekennzeichnet,** daß die Komponenten Funkteil und Hörer des Mobiltelefons im DTI integriert sind.

5. Digitales Telefon-Interface nach einem der Ansprüche 1 bis 4, dadurch **gekennzeichnet,** daß die Schnittstelle EMMI über ein Bussystem mit dem Funkteil des Mobiltelefons und über eine serielle Schnittstelle mit der DTI-Baugruppe verbunden ist.

6. Digitales Telefon-Interface nach einem der Ansprüche 1 bis 5, **gekennzeichnet** durch Einrichtungen zur Solarstromversorgung.
